# FASCICULE DE BREVET EUROPEEN

(11) **EP 1 200 256 B1**
(45) Date de publication et mention de la délivrance du brevet: **31.05.2006**
(21) Numéro de dépôt: 00943844.1
(22) Date de dépôt: 21.06.2000
(51) Int. Cl.: B32B 17/10, G02B 5/22, C03C 27/10

(54) **VITRAGE NOTAMMENT POUR TOIT DE VEHICULE**
VERGLASUNG INSBESONDERE FÜR EIN FAHRZEUGDACH
GLAZING IN PARTICULAR FOR MOTOR VEHICLE ROOF PANEL

(30) Priorité: 30.06.1999 BE 9900452
(43) Date de publication de la demande: 02.05.2002
(73) Titulaire: GLAVERBEL, 1170 Bruxelles (Watermael-Boitsfort) (BE)
(72) Inventeur: COSTER, Dominique, B-5020 Temploux (BE); LEGRAND, Denis, F-59144 Wargnies (FR)
(74) Mandataire: Le Vaguerèse, Sylvain Jacques
(86) Numéro de dépôt international: PCT/EP2000/005696
(87) Numéro de publication internationale: WO 2001/002167

(56) Documents cités:
- EP-A- 0 081 346
- EP-A- 0 353 141
- EP-A- 0 687 554
- EP-A- 0 691 199
- EP-A- 0 818 600
- EP-A- 0 887 320
- GB-A- 1 524 393

## Description

La présente invention est relative aux vitrages utilisés pour les véhicules automobiles, et particulièrement aux vitrages entrant dans la constitution des toits ou autres parties du véhicule ne requérant qu'une transmission lumineuse limitée telles que les vitrages latéraux ou arrière. Dans la suite de la description il est fait mention de toits par mesure de commodité, mais ceci inclut tous les vitrages susceptibles de répondre aux mêmes conditions d'utilisation.

Les vitrages utilisés dans les toits des véhicules automobiles ont d'abord servi à la constitution de panneaux ouvrants. Ces éléments étaient de dimensions modestes. Les exigences mécaniques pour ces panneaux se limitaient à leur propre résistance. Ces premiers panneaux étaient constitués de feuilles de verre monolithiques qui répondaient de façon satisfaisante à ces exigences peu contraignantes. Des verres utilisés pour la constitution de tels panneaux sont décrits par exemple dans FR-A 2 738 238.

Par ailleurs, il est immédiatement apparu nécessaire de contrôler l'apport thermique lié à la présence de ces panneaux vitrés disposés sur le toit des véhicules. Pour minimiser cet apport différentes solutions ont été proposées, et en particulier l'utilisation de verres colorés, celle de verres portant des couches minces absorbantes ou réfléchissantes, ou encore des feuilles de verre dont la transmission lumineuse est limitée par la présence d'un motif émaillé qui masque partiellement la surface transparente.

Les stylistes des constructeurs recherchent systématiquement un accroissement des surfaces transparentes et entreprennent maintenant de doter les véhicules de vitrages recouvrant une part significative, voire la totalité, des toits. Le remplacement du toit métallique traditionnel par un vitrage pose différents problèmes qui dépassent ceux rencontrés antérieurement avec les panneaux de petites dimensions.

La question de la protection contre l'échauffement de l'habitacle est, bien entendu, d'autant plus sensible que la surface concemée est plus importante. Une extension de la surface allant jusqu'à dix fois celle des panneaux antérieurs nécessite des solutions très performantes dans le contrôle énergétique. Mais la réalisation de ces toits pose aussi des problèmes spécifiques. En premier les vitrages utilisés doivent offrir des propriétés mécaniques au moins égales à celles des toits métalliques traditionnels, lesquels participent notamment à la rigidité de la structure d'ensemble. Les vitrages des toits doivent aussi présenter toutes les garanties de sécurité pour les passagers en cas d'accident, comme les autres vitrages, notamment les pare-brise. A ce titre ils ne doivent faire courir aucun risque de lacération lorsqu'ils sont brisés. Ils doivent aussi faire obstacle à l'éjection des passagers. Ils doivent ensuite satisfaire des exigences concernant les caractéristiques optiques, exigences visant le confort des passagers, notamment comme indiqué précédemment en limitant l'énergie pénétrant dans l'habitacle, mais aussi en limitant la luminosité pour préserver le caractère "privé" de l'habitacle. Ils doivent encore être réalisables dans des conditions de coût acceptables par les constructeurs. A toutes ces exigences s'en ajoutent d'autres qui tiennent à des considérations plus subjectives, comme celles relatives à l'esthétique intérieure et extérieure du véhicule. En particulier, la lumière transmise ne doit pas être "colorée" de manière qui modifierait de façon déplaisante la perception des objets et personnes présents dans l'habitacle. Une lumière satisfaisante de ce point de vue est qualifiée de "neutre". Ceci correspond de façon simplifiée à des vitrages que l'on perçoit en transmission comme essentiellement "gris". Mais le cas échéant, certaines colorations sont acceptées et même souhaitées par les constructeurs pour autant qu'elles ne produisent pas un "rendu de couleurs" gênant. En pratique, à l'heure actuelle les constructeur peuvent par exemple s'accommoder de teintes bleues et bleu-vertes.

A l'origine les panneaux vitrés monolithiques disposés sur les toits, présentaient une épaisseur de 4 à 7 mm. Ces épaisseurs étaient suffisantes pour ces éléments sans rôle structurel. Pour la sécurité les panneaux en question subissaient une trempe thermique. Ultérieurement, des ensembles feuilletés ont également été proposés dans le but d'offrir les propriétés de sécurité bien connues, qui sont celles notamment des vitrages constituant les pare-brise.

La mise en oeuvre de panneaux feuilletés dans les toits de véhicules a été proposée en particulier pour introduire des couches minces fonctionnelles. La structure feuilletée présente l'avantage de concilier la présence de ces couches avec une bonne tenue aux contraintes d'usure. Les couches fonctionnelles situées sur les faces des vitrages qui ne sont pas en contact avec le milieu environnant sont à l'abri des dégradations par rayure, abrasion etc, contrairement à ce que l'on peut avoir en utilisant une couche déposée sur un vitrage monolithique.

Un but de l'invention est de proposer des vitrages destinés à constituer une part substantielle, voire la totalité de la surface de toits de véhicules automobiles, ou de vitrages devant présenter des caractéristiques analogues, vitrages qui offrent des solutions avantageuses en réponse aux différentes exigences rappelées ci-dessus.

Les vitrages selon l'invention sont composés d'au moins deux feuilles de verre réunies au moyen d'une feuille intercalaire d'un matériau thermoplastique traditionnel dans les vitrages feuilletés, vitrages qui présentent une transmission énergétique, TE, inférieure à 15%, une transmission lumineuse TL, qui n'est pas supérieure à 35%, et dont les caractéristiques en transmission conduisent à une lumière dont les caractéristiques se situent sur le diagramme de chromaticité du CIE, dans le périmètre défini par les points de coordonnées B (0,2600 ; 0,3450), F (0,3300 ; 0,3300), G (0,3150 ; 0,2900), H (0,2350 ; 0,2750).

La transmission énergétique des vitrages selon l'invention TE est aussi faible que possible. Il est souhaitable dans tous les cas de limiter l'apport énergétique pour éviter l'échauffement de l'habitacle, et/ou, ne pas solliciter inutilement l'installation de conditionnement d'air qui est grande consommatrice d'énergie. Selon l'invention, la transmission énergétique est de préférence au plus de 10% de l'énergie incidente. Avantageusement cette transmission est inférieure à 8%, ou même 6%.

Comme indiqué ci-dessus, on s'efforce de réduire la transmission énergétique à des valeurs inférieures à 10%, il est possible selon l'invention d'utiliser certains vitrages feuilletés dont les particularités chromatiques, sont celles indiquées précédemment, et qui laissent passer un peu plus de 10% de l'énergie incidente. Dans ces conditions cependant, les vitrages en question se distinguent de préférence par les caractéristiques relatives à la teneur en fer. Ces vitrages feuilletés comportent au moins deux feuilles de verre dont les agents chromophores comprennent du fer à une teneur en fer total exprimée en Fe₂O₃, comprise entre 0,9 et 1,8%. Les deux feuilles de verre doivent répondre simultanément à cette condition mais par ailleurs peuvent être de compositions identiques ou différentes. Ces conditions particulières, moins exigeantes en ce qui concerne la limitation de la transmission énergétique, ne permettent cependant pas de faire abstraction de l'obligation de contrôler cette transmission énergétique. Celle-ci ne doit pas dépasser 15%. Des vitrages de ce type peuvent être mis en oeuvre en particulier lorsque ses dimensions ne sont pas trop grandes, et que la question énergétique est moins sensible.

Les moyens usuels pour limiter la transmission énergétique, coloration des verres, présence de couches réfléchissantes ou absorbantes, émaillage partiel du vitrage, conduisent simultanément à une réduction de la transmission lumineuse dans le visible. En pratique, près de la moitié de l'énergie solaire est transmise par le rayonnement dans le domaine visible. On comprend donc que l'on s'efforce également de réduire la transmission dans le visible, ne serait ce que pour diminuer d'autant la transmission énergétique. La réduction de la transmission lumineuse est encore souhaitée par les constructeurs, pour favoriser le caractère privé de l'habitacle. Une transmission lumineuse inférieure à 35% est la plus élevée qui permette de concilier cette exigence de luminosité réduite, qui dissimule l'intérieur de l'habitacle à l'observateur situé à l'extérieur, et atténue sensiblement l'apport énergétique correspondant. De préférence la transmission lumineuse n'est pas supérieure à 25%, et de façon particulièrement préférée, pas supérieure à 20%.

De préférence la réduction de la transmission lumineuse dans le visible ne doit pas non plus être perçue comme excessive par les passagers. Il faut maintenir un minimum de transmission pour conserver l'impression de "toit transparent". Néanmoins cette impression peut être satisfaite avec des transmissions lumineuses très faibles, par exemple de l'ordre de 5% ou moins. Le plus souvent les vitrages selon l'invention ont une TL qui n'est pas inférieure à 10%.

Les éléments de chromaticité auxquels la définition de l'invention se réfère sont rappelés dans ce qui suit pour plus de clarté, bien qu'ils soient usuels pour les techniciens du domaine des verres colorés.

Les propriétés optiques d'une feuille de verre, de façon générale, sont rapportées à un illuminant standard. Les plus usuels sont l'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant représente la lumière émise par des phares de voiture, et est essentiellement destiné à évaluer les propriétés optiques des vitrages utilisés pour les véhicules automobiles. La Commission Internationale de l'Eclairage a également publié un document intitulé "Colorimétrie, Recommandations Officielles de la C.I.E." (mai 1970), qui décrit un système dans lequel les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. 1931. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et, de ce fait, a une pureté d'excitation égale à zéro pour toute longueur d'onde. Des lignes peuvent être tirées depuis le point C vers le spectrum locus à toute longueur d'onde désirée, et tout point situé sur ces lignes peut être défini, non seulement par ses coordonnées x et y, mais aussi en fonction de la longueur d'onde correspondant à la ligne sur laquelle il se trouve, et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pourcent.

Les coordonnées C.I.E. de lumière transmise par un vitrage coloré dépendent non seulement de la composition du verre mais aussi de son épaisseur.

Dans la description qui suit ainsi que dans les revendications, on utilise encore:
- la transmission lumineuse totale pour l'illuminant A (TLA), mesurée pour une épaisseur de 4 mm (TLA4) et un angle d'observation solide de 2°. Cette transmission totale est le résultat de l'intégration entre les longueurs d'onde de 380 et 780 nm de l'expression: ΣT_{λ}.E_{λ}.S_{λ} / Σ E_{λ}.S_{λ} dans laquelle T_{λ} est la transmission à la longueur d'onde λ, E_{λ} est la distribution spectrale de l'illuminant A et S_{λ} est la sensibilité de l'oeil humain normal en fonction de la longueur d'onde λ.
- la transmission énergétique totale (TE) selon Moon (ISO 9050), mesurée pour une épaisseur de 4 mm (TE4) et sous un angle solide d'observation de 2°. Cette transmission totale est le résultat de l'intégration entre les longueurs d'onde 300 et 2500 nm de l'expression: Σ T_{λ}.E_{λ} / Σ E_{λ} dans laquelle E_{λ} est la distribution énergétique spectrale du soleil à 30° au dessus de l'horizon.
- la sélectivité (SE), mesurée par le rapport de la transmission lumineuse totale pour l'illuminant A et de la transmission énergétique totale (TLA/TE)
- la transmission totale dans l'ultraviolet, mesurée pour une épaisseur de 4mm (TUV4). Cette transmission totale est le résultat de l'intégration entre 280 et 380 nm de l'expression : ΣT_{λ}.U_{λ}./ΣU _{λ}, dans laquelle U_{λ} est la distribution spectrale du rayonnement ultraviolet ayant traversé l'atmosphère, déterminée dans la norme DIN 67507.
- la couleur (λ, P, x, y) est calculée en illuminant C, angle d'observation solide 2°, pour l'épaisseur du vitrage considéré ;
- l'indice de rendu des couleurs est établi selon la norme EN 410 (illuminant D₆₅).

Les coordonnées du périmètre colorimétrique répondant aux caractéristiques de l'invention conduisent de manière générale à des vitrages dont l'apparence en transmission est grise, ou bleutée dans la partie de ce périmètre correspondant aux coordonnées les plus faibles, autrement dit pour la partie la plus proche du point H. Le degré de pureté retenu pour les vitrages correspondant à cette partie fait que le rendu de couleur reste satisfaisant.

La nuance bleutée est incluse dans le périmètre de l'invention pour répondre, le cas échéant, au souhait d'harmoniser l'ensemble des vitrages d'un même véhicule. Récemment le choix des constructeurs pour les vitrages latéraux et arrière s'est orienté vers des colorations bleutées, avec des degrés de pureté variant selon le type de vitrage considéré, les plus fortement colorés se situant habituellement à l'arrière des véhicules.

Le choix, selon l'invention, est de préférence pour les produits les plus neutres. Dans ce sens, un périmètre avantageux est défini par les points de coordonnées B' (0,2650 ; 0,3350), F' (0,3200 ; 0,3200), G' (0,3100 ; 0,3000) et H'(0,2500 ; 0,2900). De façon particulièrement préférée, les vitrages selon l'invention présentent une lumière en transmission dont les caractéristiques correspondent au périmètre B" (0,2800 ; 0,3300), F" (0,3089 ; 0,3225), G"(0,2890 ; 0,2975), H"(0,2600 ; 0,2930).

Les vitrages selon l'invention peuvent représenter une part plus ou moins importante de la surface du toit des véhicules auxquels ils sont destinés. Ils peuvent également servir à la constitution d'autres éléments vitrés du véhicule comme indiqué précédemment. De manière générale, comparée à celle des panneaux de toits antérieurs, leur surface est relativement importante, de l'ordre du mètre carré, et pour les grands véhicules, type "monospace", cette surface peut aller jusqu'à deux mètres carrés ou plus. Bien entendu, les vitrages selon l'invention, qui répondent aux exigences spécifiques des grandes dimensions, peuvent aussi avantageusement être utilisés pour constituer des éléments de dimensions plus modestes, et en particulier pour les panneaux de toits.

La structure feuilletée comprend traditionnellement deux feuilles de verre réunies au moyen d'une feuille intercalaire en matériau thermoplastique. Il est possible de rassembler plus de deux feuilles de verre. En pratique cependant une telle solution, qui pourrait conduire notamment à des propriétés mécaniques encore améliorées, se heurte à des problèmes de poids et de coût. La multiplicité des feuilles, même si l'épaisseur de chacune est limitée, ne peut conduire qu'à un accroissement de l'épaisseur totale. Par ailleurs, une structure plus complexe ajoute à l'évidence au coût de production. Pour ces raisons, de façon générale, les vitrages selon l'invention sont normalement constitués à partir de deux feuilles de verre et d'une feuille intercalaire thermoplastique.

Les vitrages sont assemblés de façon traditionnelle. Les matériaux constitutifs de la feuille intercalaire sont en particulier les polyvinylbutyral (PVB), les acétates de polyvinyle (EVA), les chlorures de polyvinyle (PVC), et les résines de polyuréthanne (PU). Ces matériaux intercalaires peuvent être choisis, le cas échéant, pour participer à l'établissement des propriétés optiques du vitrage. A titre indicatif les feuilles de PVB renferment traditionnellement des agents anti-UV, dont le rôle est de protéger le matériau contre le vieillissement, mais qui simultanément confèrent au vitrage des propriétés filtrantes des UV très puissantes. Les feuilles thermoplastiques peuvent aussi intervenir dans l'établissement des conditions requises en terme de transmission lumineuse, ou encore de couleur. Dans cette idée, il est possible d'utiliser des feuilles intercalaires qui sont elles-mêmes colorées dans la masse.

La nature des colorants utilisés pour les matériaux thermoplastiques, et par suite leurs propriétés, sont sensiblement différentes de celles des colorants des verres. La différence la plus importante pour l'application selon l'invention, concerne la transmission énergétique. On sait qu'à la base des colorations des verres, interviennent les oxydes de fer. En particulier, l'ajustement des teneurs oxyde fernque/oxyde ferreux, contribue de façon très sensible, non seulement à l'établissement de la couleur, mais aussi à celui de la transmission énergétique. Les colorants utilisés habituellement dans les feuilles plastiques absorbent proportionnellement beaucoup plus dans le visible que dans l'infrarouge. Sachant que l'on s'efforce en règle générale, pour une transmission lumineuse donnée, d'avoir la transmission énergétique la plus faible possible, le choix d'un intercalaire coloré n'est pas habituellement préféré. Néanmoins, l'utilisation des feuilles intercalaires colorées n'est pas exclue. On les utilise pour compléter, ajuster ou corriger la coloration conférée au vitrage par les feuilles de verre et, éventuellement par les couches minces additionnelles.

A titre indicatif, lorsque l'on veut un vitrage dont les caractéristiques le situent sur le diagramme chromatique dans la zone des bleus, il est possible, partant d'une feuille de verre de coloration verte , par association avec un intercalaire bleu, de donner à l'ensemble formé une coloration à dominante bleue.

Nous avons indiqué ci-dessus à quelles conditions devaient satisfaire les vitrages selon l'invention. Nous avons aussi précisé les principales caractéristiques des feuilles. Le choix des feuilles de verre est bien entendu déterminant pour les propriétés du vitrage. Pour cette raison, cherchant à obtenir un vitrage "neutre" ou bleuté, à faible transmission énergétique, et à transmission lumineuse contrôlée, on utilise de préférence des feuilles de verre qui individuellement présentent déjà ce type de propriétés. En d'autres termes, on utilise avantageusement des feuilles de verre qui sont de très faible pureté d'excitation, et dont les transmissions énergétiques et lumineuses sont limitées, ou des assemblages comportant une feuille de ce type.

On utilise ainsi avantageusement au moins une feuille de verre gris dont la pureté d'excitation est inférieure à 10%, et qui, sous une épaisseur de 4mm, a une transmission lumineuse (TLA) inférieure à 25%, et de préférence inférieure à 20%. Des verres correspondant à ces conditions sont par exemple des verres sodo-calciques dont les composants de structure sont de façon traditionnelle dans les teneurs pondérales suivantes:

| | | | |
|---|---|---|---|
| SiO₂ | 60-75 % | Al₂O₃ | 0-5 % |
| Na₂O | 10-20 % | BaO | 0-2 % |
| CaO | 0-16 % | BaO+CaO+MgO | 10-20 % |
| K₂O | 0-10 % | K₂O+Na₂O | 10-20 % |
| MgO | 0-10 % | | |

A ces composants s'ajoutent des constituants chromophores notamment : Fe₂O₃, Co, Se, Cr₂O₃. Des verres "gris" de ce type sont notamment ceux dont les agents chromophores sont dans les teneurs :

| | |
|---|---|
| Fe₂O₃ | 1-1,65 % |
| Co | 0,017-0,030 % |
| Se | 0,001-0,0100. % |

Une autre combinaison de chromophores avantageuse comprend en plus de l'oxyde de chrome. Des teneurs préférées dans ce cas sont par exemple :

| | |
|---|---|
| Fe₂O₃ | 0,75-1,8 % |
| Co | 0,0040-0,0180 % |
| Se | 0,0003-0,0040 % |
| Cr₂O₃ | 0,0010-0,0100 % |

Des verres de ces types sont décrits de façon détaillée notamment dans les publications FR-A 2 738 238 et 2 738 240.

Tous les verres précédents sont très neutres et "gris" en transmission. Le cas échéant, comme indiqué précédemment, les vitrages selon l'invention peuvent présenter une nuance bleutée. Pour atteindre ce type de vitrage il est avantageux de disposer dans l'assemblage feuilleté d'au moins une feuille de verre présentant ce type de coloration.

Un verre de ce type préféré est par exemple un verre sodo-calcique dont les constituants chromophores sont essentiellement les oxydes de fer et le cobalt dans les proportions pondérales:

| | |
|---|---|
| Fe₂O₃ (fer total) | 1,1-1,8 % |
| FeO | 0,30-0,50 % |
| Co | 0,0030-0,0270 % |

auxquels s'ajoutent éventuellement d'autres agents dans les limites indiquées ci-après :

| | |
|---|---|
| Cr₂O₃ | 0-0,1000 % |
| V₂O₅ | 0-0,0500 % |
| CeO₂ | 0-0,5 % |
| TiO₂ | 0-1,5 % |
| Se | 0-0,0100 % |

Des verres bleus répondant à cette définition sont décrits de façon détaillée dans la demande de brevet européen déposée le 22 décembre 1998 sous le n°98 124 371.0.

Si l'on utilise une feuille de verre bleu telle qu'indiquée précédemment , ses caractéristiques de transmission sont habituellement, sous 4mm, de l'ordre de 35 à 45% de TLA et 20 à 30% de TE. Une feuille de ce type, par exemple de 2mm d'épaisseur, doit être associée à une feuille de verre neutre plus absorbante pour parvenir à un vitrage répondant aux caractéristiques de l'invention. Une association, par exemple avec une feuille grise fortement absorbante, du type de celles décrites ci-dessus, conduit à un ensemble satisfaisant. Des exemples de telles combinaisons sont donnés plus loin de manière plus précise.

Il est également avantageux selon l'invention, d'utiliser au moins une feuille de verre connue pour sa faible transmission énergétique. Des verres de ce type à forte sélectivité sont notamment ceux dont les chromophores sont en proportions :

| | |
|---|---|
| Fe₂O₃ (fer total) | 1,2-1,85 % |
| FeO | 0,40-0,50 % |
| Co | 0,0020-0,013 % |
| Cr₂O₃ | 0-0,0240 % |
| V₂O₅ | 0-0,1 % |
| Se | 0-0,0015 % |

Ces verres sont de couleur très foncée avec une nuance verte à bleue. Leur sélectivité dépasse souvent 1,65. Ils sont décrits de façon détaillée dans la demande de brevet français déposée le 31 juillet 1998 sous le n°98/100020.

Une autre série de verres colorés très sélectifs et à faible transmission énergétique correspond aux compositions dans lesquelles les chromophores sont :
soit

| | |
|---|---|
| Fe₂O₃ (fer total) | 1,2-1,8 % |
| FeO | 0,25-0,35 % |
| Co | 0,0020-0,010 % |
| Cr₂O₃ | 0,001-0,0100 % |
| CeO₂ | 0,1-0,8 % |

soit

| | |
|---|---|
| Fe₂O₃ (fer total) | 0,9-1,8 % |
| FeO | 0,25-0,35 % |
| Co | 0,0010-0,010 % |
| Cr₂O₃ | 0-0,0240 % |
| V₂O₅ | 0-0,2 % |

Ces verres très colorés également, sont gris-verts. Ils ont une sélectivité normalement supérieure à 1,5. Ils sont décrits dans la publication EP-A 0887320.

Les caractéristiques d'au moins une des feuilles de verre de préférence satisfont individuellement aux relations suivantes :
P < 20%
R > -P+80%
dans lesquelles P est la pureté d'excitation mesurée sous 4mm d'épaisseur, avec l'illuminant C, sous un angle solide d'observation de 2°, et R l'indice de rendu des couleurs tel que défini dans la norme EN 410. Ce dernier indice traduit l'observation à travers un vitrage déterminé, d'un ensemble de huit échantillons de couleur éclairés par l'illuminant de référence D₆₅. L'indice de rendu des couleurs est d'autant plus élevé que la présence du vitrage modifie moins la perception des couleurs. Les verres gris dans l'ensemble sont ceux dont l'indice de rendu des couleurs est le plus élevé. Il est généralement supérieur à 80% et peut atteindre et même dépasser 90%. Comparativement les verres qui confèrent une nuance bleutée, ont dans l'ensemble un indice plus faible qui se situe à environ 75%. De façon générale, on utilise pour constituer les vitrages selon l'invention des feuilles dont l'indice de rendu des couleurs n'est pas inférieur à 70 et de préférence 75%.

Les verres les plus neutres, et qui sont de couleur grise répondent avantageusement aux conditions :
P < 10%
R > -P+90%

Bien entendu, comme précédemment, l'important est ce que le vitrage complet permet d'obtenir. Selon l'invention, les vitrages présentent avantageusement un indice de rendu des couleurs supérieur à 70%, et de préférence supérieur à 75%.

Le choix des verres des feuilles constituant le vitrage selon l'invention est encore tributaire de l'épaisseur retenue. A ce propos il faut rappeler que si l'épaisseur des feuilles de verre intervient de façon évidente sur les caractéristiques optiques, et en particulier sur les valeurs de transmission lumineuse et énergétique, le choix des épaisseurs ne peut être fait sans considérer les contraintes de poids. Ces dernières, sans être impératives, conduisent cependant à préférer les vitrages répondant aux exigences précédemment indiquées, et qui par ailleurs sont les plus légers possibles. L'idéal serait d'avoir des toits dont la masse ne serait pas supérieure à celle des toits de tôle correspondant. A défaut les constructeurs souhaitent limiter la surcharge introduite par l'utilisation d'un vitrage.

En pratique, il est souhaitable de ne pas dépasser une épaisseur de l'ordre de 6,5mm et de préférence de 5,5mm. En dépit de l'avantage qui s'attache aux vitrages de faible épaisseur, et donc de poids limité, il est difficile de produire des vitrages dont l'épaisseur est inférieure à 4mm, et qui conservent toutes les propriétés, notamment de résistance mécanique, exigées des vitrages utilisés dans les conditions de l'invention.

Dans ces conditions les feuilles de verre utilisées pour constituer le vitrage feuilleté, ont avantageusement une épaisseur d'au moins 1,8mm et au plus égale à 4mm. De préférence l'épaisseur de chacune des feuilles de verre est comprise entre 2 et 3,8mm.

Le poids de la feuille intercalaire dans le vitrage, est relativement faible par rapport à celui des feuilles de verre. Pour cette raison, le choix de l'épaisseur est essentiellement commandé par des considérations relatives aux conditions de production, et aux propriétés mécaniques du vitrage constitué. Une épaisseur très faible peut compliquer l'assemblage des feuilles de verre et/ou fragiliser le vitrage. En pratique la feuille intercalaire a une épaisseur au moins égale à 0,3mm. A l'inverse, au delà d'une certaine épaisseur un accroissement supplémentaire n'améliore pas les propriétés mécaniques et accroît le coût. Pour cette raison, il est préféré d'utiliser un intercalaire dont l'épaisseur n'est pas supérieure à 1,5mm, et plus avantageusement inférieure à 1mm.

Traditionnellement les panneaux vitrés utilisés antérieurement, étaient trempés pour répondre aux exigences de sécurité. Les vitrages selon l'invention étant feuilletés bénéficient des propriétés propres à ce type de structure. En cas de choc notamment, les feuilles peuvent se briser, mais les morceaux sont maintenus par leur adhérence à la feuille intercalaire, évitant les risques de lacération. De la même façon, le maintien de la structure du vitrage après que les feuilles de verre soient brisées, permet, dans un accident, de réduire les risques d'éjection des passagers.

Les qualités des vitrages feuilletés ne permettent cependant pas d'atteindre certaines performances des vitrages trempés pour ce qui concerne la résistance mécanique. A titre indicatif, pour les mêmes épaisseurs de verre, la résistance à la flexion d'une feuille trempée encapsulée est respectivement de 50(instantanée, 10s) et 20 MPa (permanente) pour la feuille trempée, et seulement de 20 et 10 MPa pour le feuilleté correspondant.

Dans la pratique, selon l'invention, pour retrouver des caractéristiques voisines de celles des verres trempés, pour ce qui concerne notamment la résistance à la flexion , il est proposé d'utiliser des verres semi-trempés qui se prêtent bien à la mise en forme des feuilletés et présentent des propriétés mécaniques améliorées par rapport à ceux-ci. Les résistances à la flexion, pour des caractéristiques analogues aux précédentes, s'établissent ainsi à des valeurs respectives qui sont d'au moins les 2/3 de celles des verres trempés. Typiquement, pour les conditions précédentes, le verre semi-trempé (ou durci) présente des valeurs de résistance à la flexion (instantanée et permanente) de l'ordre de 35 et 15MPa.

Les vitrages selon l'invention peuvent également comprendre des couches fonctionnelles. Il s'agit normalement de couches antisolaires dont le rôle principal est de réduire encore la transmission énergétique à l'intérieur de l'habitacle. Il s'agit de couches absorbantes et /ou réfléchissantes traditionnelles. Ce sont notamment des couches à base d'oxydes conducteurs tels que les oxydes d'étain dopés ou non, notamment au fluor ou à l'antimoine, de couches à base d'oxyde d'étain et d'indium, ou de couches métalliques comme les couches simples ou multiples d'argent.

Les couches, lorsqu'elles sont présentes, sont disposées de préférence sur les faces du vitrage qui après assemblage ne sont pas exposées à l'air environnant. Ces faces sont celles qui se trouvent au contact de la feuille intercalaire thermoplastique. Dans cette position les couches minces se trouvent protégées contre les détériorations accidentelles rayures ou analogues.

Les couches antisolaires utilisables selon l'invention peuvent être produites suivant les techniques habituelles dans ce domaine, à savoir principalement des techniques de pyrolyse ou des techniques de dépôt sous vide. Les techniques de pyrolyse sont celles qui conduisent aux couches les moins coûteuses. Elles sont réalisables directement sur le ruban de verre en formation.

Le plus usuel est de procéder par une technique de pyrolyse gazeuse (CVD) dans l'enceinte du "float", ou à la sortie de celui-ci, pour profiter de la température du ruban de verre pour réaliser la pyrolyse. La mise en oeuvre d'une pyrolyse dans ces conditions peut cependant poser un problème lorsque l'on opère sur une feuille de verre de faible épaisseur. Le fait de produire la réaction à partir de l'énergie emmagasinée implique une modification de l'état thermique de la feuille d'autant plus sensible que celle-ci est plus mince. Sur les feuilles très minces, de 2mm et moins, l'abaissement de température de la face traitée peut conduire à des déformations de la feuille qui s'opposent à un traitement bien maîtrisé. Dans le cas où une couche pyrolytique doit être incluse dans le vitrage, on choisit avantageusement de l'appliquer sur la feuille la plus épaisse, sans que ceci soit exclusif d'autres solutions.

Les dépôts sous vide ne connaissent pas ces difficultés, mais sont réalisés de façon discontinue, feuille par feuille, et leur coût est sensiblement plus élevé. Pour cette raison, dans toute la mesure du possible, les vitrages selon l'invention sont de préférence réalisés sans couches autres que celles qui peuvent être obtenues en continu sur le verre des feuilles.

Il va de soi que chacune des feuilles est susceptible de recevoir une ou plusieurs couches identiques ou différentes. Il est possible notamment de déposer par exemple une couche pyrolytique d'oxyde d'étain sur la feuille la plus épaisse, et un ensemble de couches à base d'argent par dépôt sous vide sur l'autre feuille.

L'invention est décrite de manière plus détaillée dans les exemples et en se référant en tant que de besoin aux figures annexées dans lesquelles :

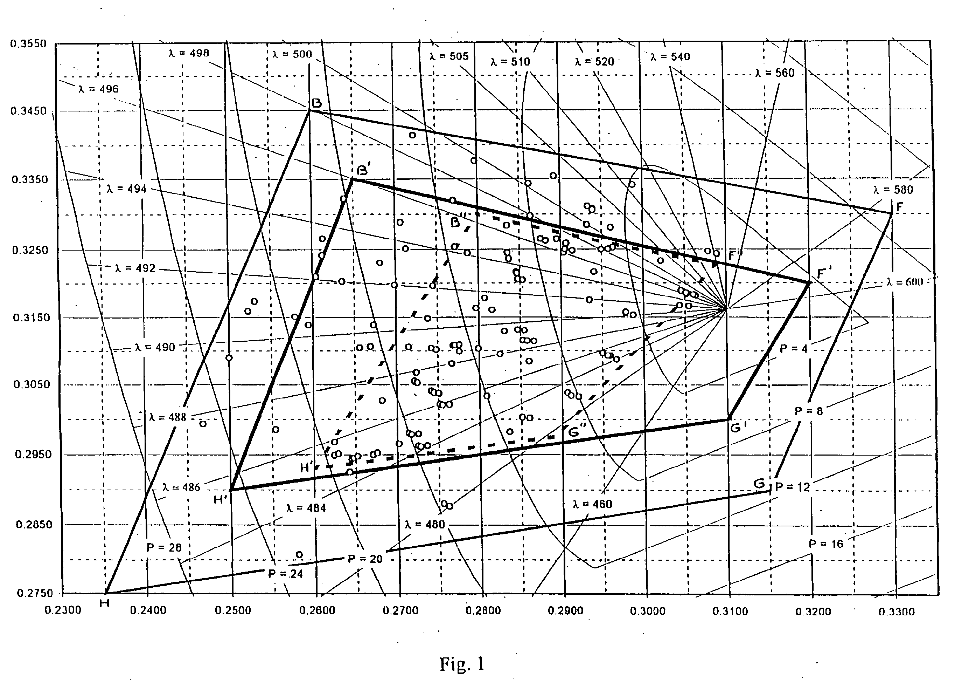

- la figure 1 est une partie du diagramme chromatique de la CIE
- la figure 2 est une représentation graphique de la relation entre indice de rendu des couleurs, et pureté d'excitation, faisant apparaître des domaines préférés selon l'invention
- la figure 3 est une représentation schématique d'une coupe de vitrage selon l'invention
- les figures 4a et 4b sont des diagrammes transmission/réflexion produits par des couches minces antisolaires typiques.

Pour les exemples de réalisation des vitrages selon l'invention, différents verres ont été utilisés. Tous ces verres ont des compositions sodo-calciques de base pratiquement identiques et correspondent aux proportions pondérales suivantes :

| | |
|---|---|
| SiO₂ | 71-72,5 % |
| Al₂O₃ | 0,13-0,95 % |
| Na₂O | 13,7-13,75 % |
| CaO | 8,3-8,7 % |
| K₂O | 0,05-0,16 % |
| MgO | 3,7-4,1 % |

Les constituants chromophores des différents verres sont reportés dans le tableau suivant. Dans ce tableau on a également indiqué les caractéristiques optiques les plus importantes pour l'objet de l'invention. Il s'agit de la transmission lumineuse, TLA, de la transmission énergétique, TE, de la pureté d'excitation P, et de l'indice de rendu des couleurs, R. Les mesures des propriétés optiques, sauf pour P, sont données pour une épaisseur de référence de 4mm. Pour la pureté elle est déterminée pour une épaisseur de 5mm en transmission spécifique interne.

La teneur en fer est la teneur en en fer total, exprimée de manière traditionnelle en Fe₂O₃.

| verre | I | II | III | IV | V | VI | VII | VIII | IX |
|---|---|---|---|---|---|---|---|---|---|
| Fe₂O₃ % | 1,243 | 1,324 | 1.555 | 1,29 | 1,461 | 1,63 | 1.65 | 0,837 | 0,95 |
| Fe²⁺/ Fetotal | 0,2662 | 0,3005 | 0,3145 | 0,333 | 0,356 | 0,332 | 0,27 | 0,2683 | 0,30 |
| SO₃ % | 0,15 | 0,14 | 0,14 | 0,13 | 0,14 | 0,18 | 0,2 | 0,2 | 0,16 |
| TiO₂ % | 0,031 | 0,050 | 0,048 | | | | | 0,05 | |
| Co (ppm) | 177 | 43 | 80 | 70 | 68 | 94 | 235 | | 7 |
| Se (ppm) | 37 | | | | | | 37 | | |
| Cr₂O₃ (ppm) | | 133 | 214 | | | 203 | | | |
| V₂O₅(ppm) | | 238 | 429 | | | 503 | | | 150 |
| TLA4 | 16,9 | 45.3 | 32,2 | 40,7 | 35,9 | 27,3 | 10 | 71,1 | 66 |
| TE4 | 15,38 | 25.24 | 17,51 | 23,2 | 19,4 | 14,8 | 8 | 44,7 | 39 |
| P | 1,8 | 9,4 | 13,5 | 19,8 | 20,3 | 18,8 | 5,8 | 3,61 | 4,5 |
| R | 90,2 | 79.2 | 72,5 | 75 | 72 | 68 | 79,5 | 95 | 92 |

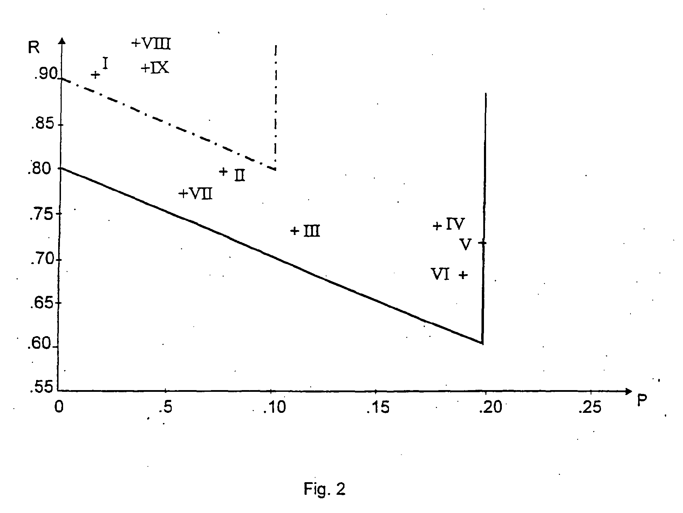

La figure 2 montre la position de ces verres sur le diagramme pureté/indice de rendu des couleurs. Le verre gris de l'exemple 1 est celui dont, simultanément, la pureté est la plus faible, et l'indice de rendu des couleurs est le plus élevé. Ce verre est dans le domaine particulièrement préféré défini par les conditions sur P et R. Les autres verres préparés dans ces exemples sont dans le domaine plus large défini également à partir des relations entre P et R. Ceci correspond bien à des verres qui, de façon générale, présentent des propriétés intéressantes pour ce qui concerne les transmissions énergétique et lumineuse, mais dont la lumière transmise n'est pas entièrement neutre, et qui, pour cela, introduisent des modifications dans la restitution des couleurs. Néanmoins ces verres sont utiles dans la constitution de vitrages selon l'invention, en particulier quand ils sont associés à un verre neutre comme cela apparaît dans les exemples donnés dans la suite de la description.

A partir de ces verres, réalisés sous plusieurs épaisseurs, différents vitrages feuilletés ont été produits. Dans tous ces vitrages la feuille intercalaire est une feuillé de PVB incolore de 0,76mm d'épaisseur, à l'exception des exemples 137, 138, 164, 166 et 177, dans lesquels la feuille intercalaire est de couleur bleue. Dans les exemples 173, 174 et 176, l'intercalaire est constitué d'un ensemble comprenant du PVB associé à une feuille de PET sur laquelle est déposé un empilement à base de couches d'argent. L'intérêt de ce type d'intercalaire est de fournir des produits qui se prêtent bien aux opérations de bombage. Les couches fonctionnelles déposées sur PET sont moins sensibles aux possibles dégradations consécutives à ces traitements de bombage, que celles déposées directement sur une feuille de verre. Dans le tableau la présence de cet intercalaire particulier est rappelé dans la colonne relative aux couches par l'indication S.

En plus de son rôle de colle des deux feuilles de verre, le PVB constitue un filtre très puissant des rayons ultraviolets. La transmission des UV de la feuille de PVB utilisée est inférieure à 1%.

Les différents vitrages produits et leurs propriétés sont rassemblés dans le tableau suivant dans lequel figurent :
- la nature du verre de chaque feuille;
- l'épaisseur de chaque feuille e₁, e_{2,}, en mm;
- l'épaisseur totale du vitrage constitué eᵥ;
- l'indication des couches fonctionnelles présentes;
- la transmission lumineuse du vitrage;
- la transmission énergétique du vitrage;
- la pureté d'excitation du vitrage;
- l'indice de rendu des couleurs du vitrage;
- la longueur dominante en transmission, λ_{D}, en nm.

Les couches fonctionnelles, en dehors de celles introduites avec l'intercalaire, sont systématiquement placées sur la face du verre tournée vers l'intercalaire PVB. Les couches essayées sont d'une part des couches d'oxyde d'étain dopées à l'antimoine (C₁ et C₂), du type de celles décrites dans les publications de brevet BE- A 1010321 et 1010322, et d'autre part des couches d'argent (C₃), telles que décrites dans la publication de brevet EP-B 336257.

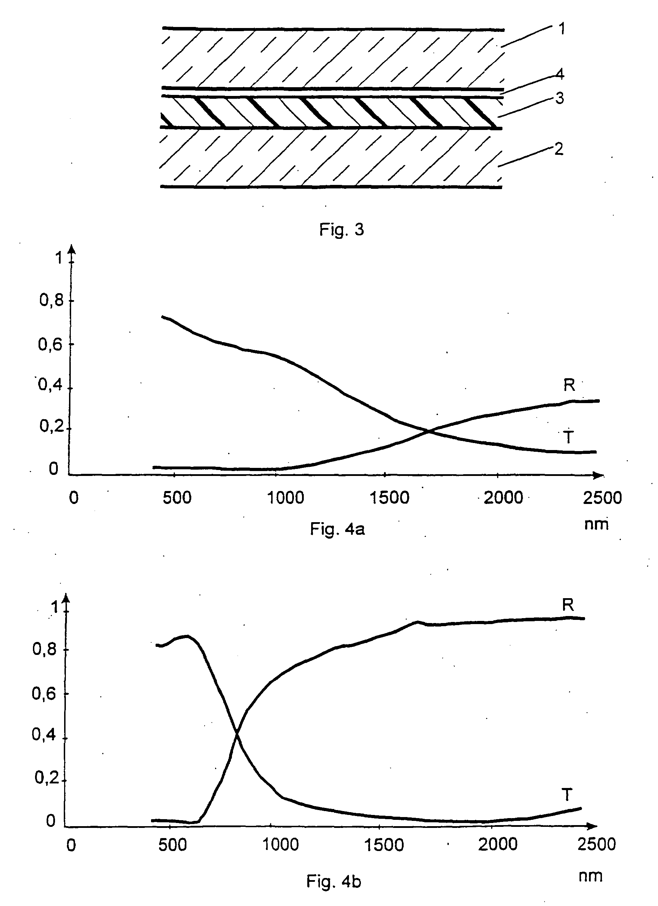

Les couches C₁ et C₃ présentent respectivement les spectres de transmission et réflexion qui font l'objet des figures 4a et 4b. Il s'agit comme indiqué de couches antisolaires. On remarque pour la couche C₁ que la transmission dans l'infrarouge (de 800 à 2500nm), est sensiblement réduite. Cette réduction est due, pour une part qui va croissant avec la longueur d'onde, à la réflexion des IR. Cette dernière est pratiquement nulle pour les longueurs d'onde visibles (inférieures à 800nm). Les caractéristiques de la couche C₂ ne sont pas représentées. Elles sont analogues à celle de C₁ avec une transmission plus limitée encore. Le diagramme 4b correspondant à un ensemble de couches à base d'argent (deux couches d'argent séparées par une couche à base d'oxyde d'étain) montre une transmission encore plus réduite que précédemment dans le domaine infrarouge. La sélectivité de cette couche (TL/TE) est aussi plus accentuée.

La structure la plus usuelle des vitrages selon l'invention est illustrée à la figure 3. Ces vitrages comprennent deux feuilles de verre 1 et 2. Ces feuilles peuvent être de nature identique ou différente, et présenter des épaisseurs différentes ou non. Les feuilles 1 et 2 sont fixées l'une à l'autre au moyen dune feuille intercalaire thermoplastique 3, dans les exemples présentés une feuille de PVB. Sur la figure 3 on a encore représenté une couche mince 4, laquelle est placée sur la face d'une des feuilles de verre du côté de l'intercalaire. Lorsque, comme dans certains exemples suivants, chacune des feuilles porte une couche fonctionnelle, ces couches sont situées de part et d'autre de l'intercalaire.

| n° | V₁ | e₁ | C | V₂ | e₂ | C | eᵥ | TL | TE | P | R | λ_{D} |
|---|---|---|---|---|---|---|---|---|---|---|---|---|
| | | | | | | | | | | | | |
| 25 | III | 3,15 | | I | 2,1 | | 6,01 | 16.4 | 9,5 | 9,1 | 77 | 496 |
| 30 | I | 3,15 | | I | 2,1 | | 6,01 | 9,9 | 8,7 | 1,7 | 91 | 496 |
| 35 | I | 3,85 | | I | 2,1 | | 6,71 | 7,3 | 6,5 | 1,9 | 85,6 | 497 |
| 40 | I | 3,15 | | II | 2,1 | | 6,01 | 13,7 | 8,8 | 6,8 | 78 | 496 |
| 41 | I | 3,15 | | I | 2,1 | | 6,01 | 9,7 | 8,6 | 1,7 | 87,4 | 497 |
| 82 | I | 3,15 | | VI | 2,1 | | 6,01 | 12,7 | 8,1 | 9,1 | 76,2 | 493 |
| 33 | I | 3,85 | | II | 2,1 | | 6,71 | 12,3 | 8,1 | 5,1 | 81 | 498 |
| 34 | I | 3,85 | | III | 2,1 | | 6,71 | 10,2 | 6,6 | 7 | 77 | 498 |
| 54 | I | 3,85 | | IV | 2,1 | | 6,71 | 11,7 | 7,8 | 9,6 | 78,7 | 489 |
| 57 | I | 3,85 | | V | 2,1 | | 6,71 | 10,9 | 6,9 | | 77,3 | |
| 60 | I | 3,15 | | IV | 2,1 | | 6,01 | 15,7 | 10,4 | 9,4 | 80,1 | 489 |
| 63 | I | 3,15 | | V | 2,1 | | 6,01 | 14,7 | 9,2 | 9,7 | 78,7 | 489 |
| 99 | I | 3,15 | | II | 2,1 | | 6,01 | 13,9 | 9 | 6,7 | 78,9 | 496 |
| 100 | I | 3,15 | | I | 2,1 | | 6,01 | 9,3 | 8,8 | 1,7 | 87,5 | 497 |
| 105 | I | 3,15 | | IV | 2,1 | | 6,01 | 12,6 | 9 | 13,8 | 75,9 | 489 |
| 106 | I | 3,15 | | II | 2,1 | | 6,01 | 13,3 | 9,5 | 9,3 | 78,6 | 495 |
| 107 | I | 3,15 | | III | 2,1 | | 6,01 | 11,1 | 7,7 | 11,1 | 74,9 | 494 |
| 108 | I | 3,15 | | I | 2,1 | | 6,01 | 8 | 7,7 | 6,1 | 85,1 | 492 |
| 109 | 1 | 3,15 | | IV | 2,1 | | 6,01 | 12,6 | 9,3 | 19,4 | 72,7 | 486 |
| 110 | I | 3,15 | | II | 2,1 | | 6,01 | 13,3 | 9,8 | 14,8 | 75,5 | 489 |
| 111 | I | 3,15 | | III | 2,1 | | 6,01 | 11,6 | 8 | 16,5 | 71,9 | 489 |
| 112 | I | 3,15 | | I | 2,1 | | 6,01 | 7,9 | 8 | 12 | 82,5 | 486 |
| 113 | I | 3,15 | | IV | 2,1 | | 6,01 | 13,1 | 9,5 | 16,6 | 76,2 | 485 |
| 114 | I | 3,15 | | II | 2,1 | | 6,01 | 13,8 | 10 | 11,7 | 78,9 | 489 |
| 115 | I | 3,15 | | III | 2,1 | | 6,01 | 11,6 | 8,2 | 13,6 | 75,2 | 489 |
| 116 | I | 3,15 | | I | 2,1 | | 6,01 | 8,3 | 8 | 9,1 | 85,2 | 493 |
| 125 | II | 3,15 | | II | 2,1 | | 6,01 | 11,1 | 6,1 | 17 | 67,2 | 492 |
| 137 | I | 3,15 | | II | 2,1 | | 6,01 | 15,1 | 10,4 | 8,4 | 77,3 | 495 |
| 88 | VII | 2,1 | | VII | 2,1 | | 4,96 | 8,9 | 7,3 | 4,6 | 79,8 | 501 |
| 10 | III | 2,1 | | I | 2,1 | | 4,96 | 21,5 | 13,9 | 6,4 | | 496 |
| 15 | I | 2,1 | | I | 2,1 | | 4,96 | 15,4 | 13,6 | 1,3 | | 497 |
| 20 | III | 3,15 | | III | 2,1 | | 6,01 | 23,3 | 11,4 | 13,8 | | 494 |
| 47 | I | 2,1 | | III | 2,1 | | 4,96 | 20,8 | 13 | 6,6 | 81 | 497 |
| 48 | I | 2,1 | | I | 2,1 | | 4,96 | 14,8 | 13,1 | 1,4 | 89,8 | 497 |
| 68 | I | 2,1 | | V | 2.1 | | 4,96 | 23,8 | 14,3 | 9,4 | 80,8 | 489 |
| 71 | I | 2,1 | | IV | 3,15 | | 6,01 | 19,7 | 11,8 | 13,1 | 75,9 | 488 |
| 73 | iv | 2,1 | | III | 3,85 | | 6,71 | 22,1 | 10,7 | 17,6 | 62,6 | 493 |
| 76 | IV | 2.1 | | VI | 3,15 | | 6,01 | 23 | 11,7 | 19,5 | 62,8 | 491 |
| 83 | I | 2,1 | | VI | 2,1 | | 4,96 | 19,7 | 12,5 | 8,9 | 78,2 | 493 |
| 94 | VII | 2,1 | | V | 2,1 | | 4,96 | 17,3 | 10,6 | 10,8 | 75,7 | 492 |
| 97 | I | 3,15 | | IV | 2,1 | | 6,01 | 15,7 | 10,4 | 9,4 | 80 | 489 |
| 98 | I | 3,15 | | II | 2,1 | | 6,01 | 16,5 | 10,9 | 4,8 | 82,5 | 498 |
| 138 | I | 3,15 | | IV | 2,1 | | 6,01 | 14,8 | 11,2 | 12,4 | 76,8 | 488 |
| 140 | I | 3,15 | | II | 2,1 | | 6,01 | 16,8 | 11,3 | 5 | 81,9 | 499 |
| 141 | I | 3,15 | | IV | 2,1 | | 6,01 | 16,4 | 12,1 | 8,8 | 81,6 | 488 |
| 91 | VII | 2,1 | | III | 2,1 | | 4,96 | 16,4 | 10 | 8 | 75,9 | 498 |
| 3 | III | 2,1 | C₁ | III | 2,1 | | 4,96 | 19,9 | 10 | 15,1 | 74,8 | 488 |
| 8 | III | 2,1 | C₁ | I | 2,1 | | 4,96 | 14 | 8,3 | 10,6 | 76,7 | 491 |
| 13 | I | 2,1 | C₁ | I | 2,1 | | 4,96 | 10 | 7,8 | 5,9 | 83 | 485 |
| 18 | III | 3,15 | C₁ | III | 2,1 | | 6,01 | 15,3 | 7,3 | 17,4 | 71 | 494 |
| 23 | III | 3,15 | C₁ | I | 2,1 | | 6,01 | 10,7 | 5,8 | 13 | 75,2 | 492 |
| 28 | I | 3,15 | C₁ | I | 2,1 | | 6,01 | 6,5 | 5 | 6,2 | 84 | 486 |
| 36 | I | 3,85 | C₂ | III | 2,1 | | 6,71 | 5,8 | 3,6 | 12,8 | 73 | 489 |
| 37 | I | 3,85 | C₂ | I | 2,1 | | 6,71 | 4,2 | 3,5 | 8,4 | 82,5 | 483 |
| 44 | I | 3,15 | C₂ | III | 2,1 | | 6,01 | 7,9 | 4,9 | 12,7 | 75 | 489 |
| 45 | I | 3,15 | C₂ | I | 2,1 | | 6,01 | 5,2 | 4,7 | 8,3 | 84,1 | 482 |
| 51 | I | 2,1 | C₂ | III | 2,1 | | 4,96 | 11,9 | 7,4 | 12,5 | 77 | 489 |
| 52 | I | 2,1 | C₂ | I | 2,1 | | 4,96 | 8,7 | 7,2 | 8 | 86,4 | 482 |
| 55 | I | 3,85 | C₂ | IV | 2,1 | | 6,71 | 6,7 | 4,3 | 15,8 | 74,7 | 484 |
| 58 | I | 3,85 | C₂ | V | 2,1 | | 6,71 | 6,3 | 3,8 | 16 | 73,4 | 485 |
| 61 | I | 3.15 | C₂ | IV | 2,1 | | 6,01 | 9 | 5,8 | 15,7 | 76 | 484 |
| 64 | I | 3,15 | C₂ | V | 2,1 | | 6,01 | 8,4 | 5,1 | 15,9 | 74,6 | 485 |
| 66 | I | 2,1 | C₂ | IV | 2,1 | | 4,96 | 14 | 9 | 15,4 | 77,8 | 484 |
| 69 | I | 2,1 | C₂ | V | 2,1 | | 4,96 | 13,1 | 8 | 15,6 | 76,5 | 485 |
| 89 | VII | 2,1 | C₂ | VI | 2,1 | | 4,96 | 5,1 | 3,9 | 10,3 | 76,7 | 457 |
| 92 | VII | 2,1 | C₂ | III | 2,1 | | 4,96 | 9,4 | 5,7 | 13,6 | 72 | 467 |
| 95 | VII | 2,1 | C₂ | V | 2,1 | | 4,96 | 10 | 5,9 | 16,7 | 71,6 | 467 |
| 72 | I | 2,1 | | IV | 3,15 | C₂ | 6,01 | 11,4 | 6,7 | 19,2 | 71,7 | 485 |
| 74 | IV | 2,1 | | III | 3,85 | C₂ | 6,71 | 12,8 | 6.2 | 22,9 | 59 | 489 |
| 78 | IV | 2,1 | | VI | 3,15 | C₂ | 6,01 | 13, | 6,7 | 24,9 | 58,9 | 488 |
| 79 | IV | 2,1 | | VI | 2,1 | C₂ | 4,96 | 18 | 9,7 | 21,8 | 65,7 | 487 |
| 84 | I | 3,15 | C₂ | VI | 2,1 | | 6,01 | 7,3 | 4,5 | 15 | 72,3 | 488 |
| 85 | I | 2,1 | C₂ | VI | 2,1 | | 4,96 | 11,3 | 7 | 14,9 | 74,2 | 487 |
| 4 | III | 2,1 | C₃ | III | 2,1 | | 4,96 | 26,6 | 12 | 10,1 | | 488 |
| 9 | III | 2,1 | C₃ | I | 2,1 | | 4,96 | 18,9 | 9,5 | 5,3 | 87,1 | 502 |
| 14 | I | 2,1 | C₃ | I | 2,1 | | 4,96 | 13,5 | 8,3 | 1,9 | 88,9 | 542 |
| 19 | III | 3,15 | C₃ | III | 2,1 | | 6,01 | 20,4 | 8,9 | 12,6 | | 499 |
| 24 | III | 3,15 | C₃ | I | 2,1 | | 6,01 | 14,4 | 6,8 | 7,9 | 81 | 500 |
| 29 | I | 3,15 | C₃ | I | 2,1 | | 6,01 | 8,7 | 5,4 | 1,8 | 87,5 | 534 |
| 42 | I | 3,15 | C₃ | III | 2,1 | | 6,01 | 12,1 | 6 | 5,5 | 78 | 502 |
| 43 | I | 3,15 | C₃ | I | 2,1 | | 6,01 | 8,7 | 5,3 | 1,8 | 86 | 534 |
| 49 | I | 2,1 | C₃ | III | 2.1 | | 4,96 | 18,9 | 9,3 | 5.3 | 80 | 502 |
| 50 | I | 2,1 | C₃ | I | 2,1 | | 4,96 | 13,5 | 8,1 | 1,9 | 88,6 | 542 |
| 86 | I | 3,15 | C₃ | VI | 2,1 | | 6,01 | 11,1 | 5,5 | 7,7 | 75,5 | 496 |
| 87 | I | 2,1 | C₃, | VI | 2,1 | | 4,96 | 17,3 | 8,5 | 7,5 | 77,5 | 496 |
| 101 | I | 3,15 | C₃ | IV | 2,1 | | 6,01 | 9 | 5,8 | 15,7 | 76 | 484 |
| 102 | I | 3,15 | C₃ | II | 2,1 | | 6,01 | 9,5 | 6 | 10,8 | 78,5 | 488 |
| 103 | I | 3,15 | C₃ | III | 2,1 | | 6,01 | 8 | 5 | 12,6 | 75 | 489 |
| 104 | I | 3,15 | C₃ | I | 2,1 | | 6,01 | 5,7 | 4,8 | 8,3 | 84,2 | 482 |
| 117 | I | 3,15 | C₃ | IV | 2,1 | | 6,01 | 7,5 | 5,2 | 22,8 | 71,5 | 482 |
| 118 | I | 3,15 | C₃ | V | 2,1 | | 6,01 | 8 | 5,5 | 17,9 | 74,4 | 485 |
| 119 | I | 3,15 | C₃ | III | 2,1 | | 6,01 | 6,6 | 4,5 | 19,6 | 70,9 | 485 |
| 120 | I | 3,15 | C₃ | I | 2,1 | | 6,01 | 4,7 | 4,4 | 15,7 | 80,9 | 480 |
| 121 | I | 2,1 | C₃ | IV | 2,1 | | 4,96 | 11,7 | 8,2 | 11,6 | 73,1 | 482 |
| 122 | I | 2,1 | C₃ | II | 2,1 | | 4,96 | 12,4 | 8,6 | 17,7 | 76,1 | 485 |
| 123 | I | 2,1 | C₃ | III | 2,1 | | 4,96 | 10,4 | 7 | 19,4 | 72,5 | 485 |
| 124 | I | 2,1 | C₃ | I | 2,1 | | 4,96 | 7,4 | 6,7 | 15,5 | 83 | 480 |
| 90 | VII | 2,1 | C₃ | VII | 2,1 | | 4,96 | 7,8 | 4,4 | 3,9 | 78,7 | 481 |
| 93 | VII | 2,1 | C₃ | III | 2,1 | | 4,96 | 14,4 | 7 | 6,8 | 75,1 | 484 |
| 96 | VII | 2,1 | C₃ | V | 2,1 | | 4,96 | 15,2 | 7,3 | 9,3 | 75 | 483 |
| 80 | IV | 2,1 | | VI | 3,15 | C₃ | 6,01 | 20,3 | 8,9 | 18,1 | 62,6 | 483 |
| 81 | IV | 2,1 | C₃ | VI | 2,1 | | 4,96 | 27,6 | 12,4 | 14,7 | 69,5 | 492 |
| 1 | II | 2,1 | C₁ | III | 2,1 | C₁ | 4,96 | 13 | 6,5 | 19 | 68 | 490 |
| 6 | III | 2,1 | C₁ | I | 2,1 | C₁ | 4,96 | 9,2 | 5,2 | 14,8 | 71 | 488 |
| 11 | I | 2,1 | C₁ | I | 2,1 | C₁ | 4,96 | 6,5 | 4,7 | 10,5 | 76,2 | 483 |
| 16 | III | 3,15 | C₁ | III | 2,1 | C₁ | 6,01 | 10 | 4,8 | 21,1 | 67 | 491 |
| 21 | III | 3,15 | C₁ | I | 2,1 | C₁ | 6,01 | 7 | 3,7 | 17 | 70,5 | 489 |
| 26 | I | 3,15 | C₁ | I | 2,1 | C₁ | 6,01 | 4,2 | 3 | 10,8 | 78,1 | 483 |
| 38 | I | 3,85 | C₂ | III | 2,1 | C₂ | 6,71 | 3,4 | 2,1 | 18,9 | 69 | 491 |
| 46 | I | 3,15 | C₂ | III | 2,1 | C₂ | 6,01 | 4,5 | 2,8 | 18,8 | 70 | 485 |
| 53 | I | 2,1 | C₂ | III | 2,1 | C₂ | 4,96 | 6,9 | 4,3 | 18,6 | 72 | 485 |
| 2 | III | 2,1 | C₃ | III | 2,1 | C₁ | 4,96 | 17,4 | 7,9 | 13,8 | 74,1 | 495 |
| 7 | III | 2,1 | C₃ | I | 2,1 | C₁ | 4,96 | 12,3 | 6,2 | 9,1 | 75,3 | 494 |
| 12 | I | 2,1 | C₃ | I | 2,1 | C₁ | 4,96 | 8,8 | 5,2 | 4,3 | 81,2 | 490 |
| 17 | III | 3,15 | C₃ | III | 2,1 | C₁ | 6,01 | 13,4 | 5,9 | 16,1 | 73,8 | 495 |
| 22 | III | 3,15 | C₃ | I | 2,1 | C₁ | 6,01 | 9,4 | 4,5 | 11,6 | 76,3 | 494 |
| 27 | I | 3,15 | C₃ | I | 2,1 | C₁ | 6,01 | 5,7 | 3,4 | 4,6 | 87,3 | 491 |
| 39 | I | 3,85 | C₂ | III | 2,1 | C₃ | 6,71 | 5,1 | 2,6 | 11,3 | 73 | 491 |
| 56 | I | 3,85 | C₂ | IV | 2,1 | C₃ | 6,71 | 5,8 | 3,1 | 14,2 | 74 | 486 |
| 59 | I | 3,85 | C₂ | V | 2,1 | C₃ | 6,71 | 5,5 | 2,8 | 14,4 | 72,8 | 487 |
| 62 | I | 3,15 | C₂ | IV | 2,1 | C₃ | 6,01 | 7,9 | 4,1 | 14,1 | 75,3 | 486 |
| 65 | I | 3,15 | C₂ | IV | 2,1 | C₃ | 6,01 | 7,4 | 3,7 | 14,3 | 74 | 487 |
| 67 | I | 2,1 | C₂ | N | 2,1 | C₃ | 4,96 | 12,3 | 6,3 | 13,8 | 77,2 | 486 |
| 164 | I | 3,15 | | I | 3,15 | | 7,06 | 5,9 | 5,8 | 5,7 | 80 | 493 |
| 165 | I | 3,15 | | I | 3,15 | | 7,06 | 6,5 | 6,2 | 2,2 | 84 | 502 |
| 166 | I | 3,15 | | I | 2,1 | | 6,01 | 9,1 | 8,8 | 5,5 | 82,6 | 492 |
| 167 | I | 3,15 | | I | 2,1 | | 6,01 | 10,1 | 9,5 | 1,9 | 87 | 501 |
| 169 | I | 3,15 | | IX | 2,1 | | 6,01 | 20 | 14 | | | |
| 170 | I | 3,15 | | II | 2,1 | | 6,01 | 16,8 | 11,3 | 5 | 81,9 | 499 |
| 171 | I | 3,15 | | VI | 2,1 | | 6,01 | 14 | 9,2 | 6,8 | 78,3 | 497 |
| 172 | I | 3,15 | | IV | 2,1 | | 6,01 | 16,4 | 12,7 | 9,8 | 80,4 | 488 |
| 173 | I | 3,15 | S | IV | 2,1 | | 6,01 | 14,4 | 8,1 | 8,3 | 79,2 | 491 |
| 174 | I | 3,15 | S | VIII | 2,1 | | 6,01 | 16,6 | 8,9 | 4,3 | 84,2 | 498 |
| 175 | I | 3,9 | | VIII | 2,1 | | 6,76 | 15,5 | 11,4 | 2,8 | 85,8 | 504 |
| 176 | I | 3,9 | S | VIII | 2,1 | | 6,76 | 12,2 | 6,6 | 4,6 | 82,4 | 498 |
| 177 | I | 3,9 | | VIII | 2,1 | | 6,76 | 14 | 10,6 | 6,3 | 81,2 | 495 |
| 178 | I | 3,9 | | IV | 2,1 | | 6,76 | 12 | 9,3 | 10 | 78,8 | 488 |
| 179 | I | 3,9 | S | IV | 2,1 | | 6,76 | 9,4 | 5,3 | 11,8 | 75,5 | 488 |

Dans le tableau précédent on constate, avec les verres essayés, qu'il est possible de réunir les conditions de TE les plus rigoureuses (TE<10%) et colorimétriques de l'invention pour des feuilletés dont l'épaisseur est inférieure à 5mm. Dans un nombre important de ces exemples le vitrage comporte une ou deux couches antisolaires. Pour parvenir aux performances recherchées sous ces épaisseurs, sans couche antisolaire, il faut utiliser les verres les plus "colorés".

Pour des épaisseurs un peu plus importantes, de l'ordre de 6mm, les performances sont atteintes sans couche antisolaire avec diverses combinaisons de verre.

Les verres II, III et VI sont connus pour leurs propriétés antisolaires. Ils n'ont pas la pureté d'excitation des gris. Seuls, ils présentent en transmission une coloration bleu-verte de longueur d'onde dominante de 492 à 499nm. Associés à un verre gris, par exemple de type I, dans un vitrage, ils permettent d'atteindre une très faible transmission énergétique tout en gardant l'ensemble dans les limites colorimétriques requises selon l'invention. En d'autres termes la présence du verre gris permet d'atténuer la coloration de l'autre feuille. Bien entendu, les meilleurs rendus des çouleurs sont atteints dans les exemples correspondant à l'association de deux verres gris.

Les verres IV et V ont en transmission une longueur d'onde dominante bleue (487 et 488nm). L'utilisation de ces verres vise à conférer une nuance bleue sans sortir des limites colorimétriques de l'invention. Comme pour les verres précédents le maintien de ces caractéristiques passe par l'association avec une feuille de verre gris.

## Revendications

1. Vitrage automobile à faible transmission lumineuse, comprenant au moins deux feuilles de verre réunies au moyen d'une feuille intercalaire d'un matériau thermoplastique, qui présente une transmission lumineuse (TLA) inférieure à 35%, une transmission énergétique inférieure à 15%, et des caractéristiques colorimétriques telles que sur le diagramme de chromaticité du CIE il se situe dans le périmètre défini par les points de coordonnées : B(0,2600; 0,3450); F(0,3300; 0,3300); G(0,3150; 0,2900); H(0,2350; 0,2750).

2. Vitrage selon la revendication 1 qui présente une transmission lumineuse (TLA) inférieure à 25% et une transmission énergétique inférieure à 10%.

3. Vitrage selon la revendication 1 qui présente une transmission énergétique (TE) inférieure à 10%.

4. Vitrage selon l'une des revendications précédentes dont l'épaisseur n'est pas supérieure à 6,5mm.

5. Vitrage selon l'une des revendications précédentes dont l'épaisseur n'est pas supérieure à 5,5mm.

6. Vitrage selon l'une des revendications précédentes qui présente une transmission énergétique (TE) inférieure à 8%.

7. Vitrage selon l'une des revendications précédentes qui présente une transmission lumineuse (TLA) inférieure à 20%

8. Vitrage selon l'une des revendications précédentes, qui sur le diagramme de chromaticité du CIE se situe dans le périmètre B'(0,2650; 0,3350); F'(0,3200; 0,3200); G'(0,3100; 0,3000); H'(0,2500; 0,2900).

9. Vitrage selon la revendication 8, qui sur le diagramme de chromaticité du CIE se situe dans le périmètre B"(0,2800; 0,3300); F"(0,3089; 0,3225); G"(0,2890; 0,2975); H"(0,2600; 0,2930).

10. Vitrage selon l'une des revendications précédentes dans lequel la transmission lumineuse (TLA) n'est pas inférieure à 10%.

11. Vitrage selon l'une des revendications précédentes dans lequel une au moins des feuilles de verre présente des caractéristiques de pureté d'excitation (P), et d'indice de rendu des couleurs (R) satisfaisant aux relations suivantes:
P < 20%
R > -P+80%.

12. Vitrage selon la revendication 11 dans lequel la feuille de verre répondant aux relations indiquées présente un indice de rendu des couleurs supérieur à 70%.

13. Vitrage selon l'une des revendications précédentes dont les feuilles de verre et de matériau thermoplastique sont choisies de telle sorte que l'indice de rendu des couleurs du vitrage soit au moins égal à 70%.

14. Vitrage selon la revendication 13, dans lequel les feuilles de verre et de matériau thermoplastique sont choisies de telle sorte que l'indice de rendu des couleurs du vitrage soit supérieur à 75%.

15. Vitrage selon l'une des revendications précédentes comprenant au moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant comme constituants chromophores :
| | |
|---|---|
| Fe₂O₃ | 1-1,65% |
| Co | 0,017-0,030 % |
| Se | 0,001-0,0100.% |

16. Vitrage selon l'une des revendication 1 à 14, comprenant au
moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant comme constituants chromophores :
| | |
|---|---|
| Fe₂O₃ | 0,75-1,8% |
| Co | 0,0040-0,0180% |
| Se | 0,0003-0,0040% |
| Cr₂O₃ | 0,0010-0,0100% |

17. Vitrage selon l'une des revendications là 14 comprenant au moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant les constituants chromophores :
| | |
|---|---|
| Fe₂O₃ (fer total) | 1,1-1,8% |
| FeO | 0,30-0,50% |
| Co | 0,0030-0,0270% |
| Cr₂O₃ | 0-0,1000 % |
| V₂O₅ | 0-0,0500% |
| CeO₂ | 0-0,5% |
| TiO₂ | 0-1,5% |
| Se | 0-0,0100% |

18. Vitrage selon l'une des revendications là 14 comprenant au moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant les constituants chrorriophores :
| | |
|---|---|
| Fe₂O₃ (fer total) | 1,2-1,85% |
| FeO | 0,40-0,50% |
| Co | 0,0020-0,013% |
| Cr₂O₃ | 0-0,1% |
| V₂O₅ | 0-0,1% |
| Se | 0-0,0015% |

19. Vitrage selon l'une des revendications 1 à 14 comprenant au moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant les constituants chromophores :
| | |
|---|---|
| Fe₂O₃ (fer total) | 1,2-1,8% |
| FeO | 0,25-0,35% |
| Co | 0,0020-0,010% |
| Cr₂O₃ | 0,001-0,0100% |
| CeO₂ | 0,1-0,8% |

20. Vitrage selon l'une des revendications 1 à 14 comprenant au moins une feuille de verre de composition générale :
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
et comprenant les constituants chromophores :
| | |
|---|---|
| Fe₂O₃ (fer total) | 0,9-1,8% |
| FeO | 0,25-0,40% |
| Co | 0,0010-0,0100% |
| Cr₂O₃ | 0-0,1% |
| V₂O₅ | 0-0,2% |

21. Vitrage selon l'une des revendications précédentes comprenant au moins une couche de type antisolaire à base d'oxyde conducteur du groupe comprenant les oxydes d'étain dopés au fluor ou à l'antimoine, ou d'oxydes d'indium et d'étain.

22. Vitrage selon l'une des revendications 1 à 20 comprenant au moins un assemblage de couches de type antisolaire à base d'argent.

23. Vitrage selon l'une des revendications 1 à 20 comprenant une feuille intercalaire composite laquelle comporte un assemblage de couches antisolaire, à base d'argent.

24. Vitrage selon l'une des revendications précédentes comprenant une feuille thermoplastique intercalaire colorée.

25. Vitrage selon l'une des revendications précédentes , dans lequel les feuilles de verres sont semi-trempées.

26. Vitrage selon l'une des revendications précédentes constituant une partie au moins d'un toit de véhicule.

## Claims

1. Automotive glazing with low light transmission comprising at least two glass sheets joined by means of an interlayer sheet of a thermoplastic material, which has a light transmission (LTA) less than 35%, an energy transmission less than 15% and colorimetric characteristics such that on the CIE chromaticity diagram it is located in the perimeter defined by coordinate points: B(0.2600; 0.3450); F(0.3300; 0.3300); G(0.3150; 0.2900); H(0.2350; 0.2750).

2. Glazing according to Claim 1, which has a light transmission (LTA) less than 25% and an energy transmission less than 10%.

3. Glazing according to Claim 1, which has an energy transmission (ET) less than 10%.

4. Glazing according to one of the preceding claims, wherein the thickness is not greater than 6.5 mm.

5. Glazing according to one of the preceding claims, wherein the thickness is not greater than 5.5 mm.

6. Glazing according to one of the preceding claims, which has an energy transmission (ET) less than 8%.

7. Glazing according to one of the preceding claims, which has a light transmission (LTA) less than 20%.

8. Glazing according to one of the preceding claims, which is located on the CIE chromaticity diagram in the perimeter B'(0.2650; 0.3350); F'(0.3200; 0.3200); G'(0.3100; 0.3000); H'(0.2500; 0.2900).

9. Glazing according to Claim 8, which is located on the CIE chromaticity diagram in the perimeter B"(0.2800; 0.3300); F"(0.3089; 0.3225); G"(0. 2890; 0.2975); H"(0.2600; 0.2930).

10. Glazing according to one of the preceding claims, wherein the light transmission (LTA) is not less than 10%.

11. Glazing according to one of the preceding claims, wherein at least one of the glass sheets has excitation purity (P) and colour rendition (R) characteristics that meet the following relations:
P < 20%
R > -P+80%.

12. Glazing according to Claim 11, wherein the glass sheet meeting the indicated relations has a colour rendition index higher than 70%.

13. Glazing according to one of the preceding claims, wherein the sheets of glass and thermoplastic material are selected so that the colour rendition index of the glazing is at least equal to 70%.

14. Glazing according to Claim 13, wherein the sheets of glass and thermoplastic material are selected so that the colour rendition index of the glazing is higher than 75%.

15. Glazing according to one of the preceding claims, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ | 1-1.65% |
| Co | 0.017-0.030% |
| Se | 0.001-0.0100%. |

16. Glazing according to one of Claims 1 to 14, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ | 0.75-1.8% |
| Co | 0.0040-0.0180% |
| Se | 0.0003-0.0040% |
| Cr₂O₃ | 0.0010-0.0100%. |

17. Glazing according to one of Claims 1 to 14, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ (total iron) | 1.1-1.8% |
| FeO | 0.30-0.50% |
| Co | 0.0030-0.0270% |
| Cr₂O₃ | 0-0.1000% |
| V₂O₅ | 0-0.0500% |
| CeO₂ | 0-0.5% |
| TiO₂ | 0-1.5% |
| Se | 0-0.0100%. |

18. Glazing according to one of Claims 1 to 14, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ (total iron) | 1.2-1.85% |
| FeO | 0.40-0.50% |
| Co | 0.0020-0.013% |
| Cr₂O₃ | 0-0.1% |
| V₂O₅ | 0-0.1% |
| Se | 0-0.0015%. |

19. Glazing according to one of Claims 1 to 14, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ (total iron) | 1.2-1.8% |
| FeO | 0.25-0.35% |
| Co | 0.0020-0.010% |
| Cr₂O₃ | 0.001-0.0100% |
| CeO₂ | 0.1-0.8%. |

20. Glazing according to one of Claims 1 to 14, comprising at least one glass sheet with the following general composition:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
and comprising the following as chromophore constituents:
| | |
|---|---|
| Fe₂O₃ (total iron) | 0.9-1.8% |
| FeO | 0.25-0.40% |
| Co | 0.0010-0.0100% |
| Cr₂O₃ | 0-0.1% |
| V₂O₅ | 0-0.2%. |

21. Glazing according to one of the preceding claims, comprising at least one antisolar type layer based on a conductor oxide from the group comprising fluorine- or antimony-doped tin oxides, or indium and tin oxides.

22. Glazing according to one of Claims 1 to 20, comprising at least one assembly of silver-based antisolar type layers.

23. Glazing according to one of Claims 1 to 20, comprising a composite interlayer sheet having an assembly of silver-based antisolar layers.

24. Glazing according to one of the preceding claims, comprising a coloured thermoplastic interlayer sheet.

25. Glazing according to one of the preceding claims, wherein the glass sheets are semi-toughened.

26. Glazing according to one of the preceding claims, forming a section at least of a vehicle roof.

## Patentansprüche

1. Fahrzeugverglasung mit geringem Lichtdurchlassgrad, umfassend mindestens zwei Glasbänder, die mit Hilfe eines Zwischenbandes bzw. einer Zwischenschicht aus einem Thermoplast bzw. thermoplastischen Material verbunden sind, das einen Lichtdurchlassgrad (TLA) von weniger als 35 %, eine Energieübertragung von weniger als 15 % und derartige kolorimetrische Eigenschaften aufweist, dass es sich auf dem Farbdiagramm bzw. -tafel der CIE in dem Umfang, der durch die Punkte mit folgenden Koordinaten deflniert ist, befindet; B(0,2600; 0,3450); F(0,3300; 0,3300); G(0,3150; 0,2900); H(0,2350; 0,2750).

2. Verglasung nach Anspruch 1, die einen Lichtdurchlassgrad (TLA) von weniger als 25 % und eine Energieübertragung von weniger als 10 % aufweist.

3. Verglasung nach Anspruch 1, die eine Energieübertragung (TE) von weniger als 10 % aufweist.

4. Verglasung nach einem der vorhergehenden Ansprüche, deren Dicke nicht größer als 6,5 mm ist.

5. Verglasung nach einem der vorhergehenden Ansprüche, deren Dicke nicht größer als 5,5 mm ist.

6. Verglasung nach einem der vorhergehenden Ansprüche, die eine Energieübertragung (TE) von weniger als 8% aufweist.

7. Verglasung nach einem der vorhergehenden Ansprüche, die einen Lichtdurchlassgrad (TLA) von weniger als 20 % aufweist.

8. Verglasung nach einem der vorhergehenden Ansprüche, die sich auf dem Farbdiagramm der CIE in dem Umfang B'(0,2650; 0,3350); F'(0,3200; 0,3200); G'(0,3100; 0,3000); H'(0,2500; 0,2900) befindet.

9. Verglasung nach Anspruch 8, die sich auf dem Farbdiagramm der CIE in dem Umfang B"(0,2800; 0,3300); F"(0,3089; 0,3225); G"(0,2890; 0,2975), H"(0,2600; 0,2930) befindet.

10. Verglasung nach einem der vorhergehenden Ansprüche, bei der der Lichtdurchlassgrad (TLA) nicht geringer als 10 % ist.

11. Verglasung nach einem der vorhergehenden Ansprüche, bei der mindestens eines der Glasbänder Eigenschaften der Erregungsreinheit (P) und des Farbwiedergabeindex (R) aufweist, die folgenden Verhältnissen entsprechen:
P < 20%
R > -P±80%

12. Verglasung nach Anspruch 11, bei der das den oben erwähnten Verhältnissen entsprechende Glasband einen Farbwiedergabeindex von über 70 % aufweist.

13. Verglasung nach einem der vorhergehenden Ansprüche, deren Glas- und Thermoplastbänder derart ausgewählt werden, dass der Farbwiedergabeindex der Verglasung mindestens gleich 70 % ist.

14. Verglasung nach Anspruch 13, bei der die Glas- und Thermoplastbänder derart ausgewählt werden, dass der Farbwiedergabeindex der Verglasung größer als 75 % ist.

15. Verglasung nach einem der vorhergehenden Ansprüche, umfassend mindestens ein Glasband mit folgender allgemeiner Zusammensetzung:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
und umfassend als chromophore Bestandteile:
| | |
|---|---|
| Fe₂O₃ | 1-1,65% |
| Co | 0,017-0,030% |
| Se | 0,001-0,0100.% |

16. Verglasung nach einem der Ansprüche 1 bis 14, umfassend mindestens ein Glasband mit folgender allgemeiner Zusammensetzung:
| | | | |
|---|---|---|---|
| SiO₂ | 60-75% | Al₂O₃ | 0.5% |
| Na₂O | 10-20% | BaO | 0.2% |
| CaO | 0-16% | BaO+CaO+MgO | 10-20% |
| K₂O | 0-10% | K₂O+Na₂O | 10-20% |
| MgO | 0-10% | | |
und umfassend als chromophore Bestandteile:
| | |
|---|---|
| Fe₂O₃ | 0,75-1.8% |
| Co | 0,0040-0,0180% |
| Se | 0,0003-0,0040% |
| Cr₂O₃ | 0,0010-0,0100% |

17. Verglasung nach einem der Ansprüche 1 bis 14, umfassend mindestens ein Glasband mit folgender allgemeiner Zusammensetzung:
| | | | |
|---|---|---|---|
| SiO₂ | 60-75% | Al₂O₃ | 0-5% |
| Na₂O | 10-20% | BaO | 0-2% |
| CaO | 0-16% | BaO+CaCu-MgO | 10-20% |
| K₂O | 0-10% | K₂O+Na₂O | 10-20% |
| MgO | 0-10% | | |
und umfassend die chromophoren Bestandteile:
| | |
|---|---|
| Fe₂O₃ (Eisen gesamt) | 1,1.1,8% |
| FeO | 0,30-0,50% |
| Co | 0,0030-0,0270% |
| Cr₂O₃ | 0-0,1000% |
| V₂O₅ | 0-0,0500% |
| CeO₂ | 0-0,5% |
| TiO₂ | 0-1,5% |
| Se | 0-0,0100% |

18. Verglasung nach einem der Ansprüche 1 bis 14, umfassend mindestens ein Glasband mit folgender allgemeiner Zusammensetzung:
| | | | |
|---|---|---|---|
| SiO₂ | 60-75% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
und umfassend die chromophoren Bestandteile:
| | |
|---|---|
| Fe₂O₃ (Eisen gesamt) | 1,2-1,85% |
| FeO | 0,40-0,50% |
| Co | 0,0020-0,013% |
| Cr₂O₃ | 0-0,1% |
| V₂O₅ | 0-0,1% |
| Se | 0-0,0015% |

19. Verglasung nach einem der Ansprüche 1 bis 14, umfassend mindestens ein Glasband mit folgender allgemeiner Zusammensetzung:
| | | | |
|---|---|---|---|
| SiO₂ | 60-75% | Al₂O₃ | 0-5% |
| Na₂O | 10-20% | BaO | 0-2% |
| CaO | 0-16% | BaO+CaCH-MgO | 10-20% |
| K₂O | 0-10% | K₂O+Na₂O | 10-20% |
| MgO | 0-10% | | |
und umfassend die chromophoren Bestandteile:
| | |
|---|---|
| Fe₂O₃ (Eisen gesamt) | 1,2-1,8% |
| FeO | 0,25-0,35% |
| Co | 0,0020-0,010% |
| Cr₂O₃ | 0,001-0,0100% |
| CeO₂ | 0,1-0,8% |

20. Verglasung nach einem der Ansprüche 1 bis 14, umfassend mindestens ein Glasband mit folgender allgemeiner Zusammensetzung:
| | | | |
|---|---|---|---|
| SiO₂ | 60-76% | Al₂O₃ | 0-5% |
| Na₂O | 10-20% | BaO | 0-2% |
| CaO | 0-16% | BaO+CaO+MgO | 10-20% |
| K₂O | 0-10% | K₂O+Na₂O | 10-20% |
| MgO | 0-10% | | |
und umfassend die chromophoren Bestandteile:
| | |
|---|---|
| Fe₂O₃ (Esen gesamt) | 0,9-1,8% |
| FeO | 0,25-0,40% |
| Co | 0,0010-0,0100% |
| Cr₂O₃ | 0-0,1% |
| V₂O₅ | 0-0,2% |

21. Verglasung nach einem der vorhergehenden Ansprüche, umfassend mindestens eine Schicht vom Typ Sonnenschutz auf Basis eines leitenden Oxids aus der Gruppe umfassend die Zinnoxide, die mit Fluor oder Antimon dotiert sind, oder von Indium- und Zinnoxiden.

22. Verglasung nach einem der Ansprüche 1 bis 20, umfassend mindestens eine Verbindung bzw. Anordnung von Schichten vom Typ Sonnenschutz auf Basis von Silber.

23. Verglasung nach einem der Ansprüche 1 bis 20, umfassend eine Verbundzwischenschicht bzw, ein Verbundzwischenband, das eine Verbindung von Sonnenschutzschichten auf Basis von Silber umfasst.

24. Verglasung nach einem der vorhergehenden Ansprüche, umfassend ein farbiges Thermoplasizwischenband bzw, eine farbige Thermoplastrwischenschicht.

25. Verglasung nach einem der vorhergehenden Ansprüche, bei der die Glasbänder halb gehärtet sind.

26. Verglasung nach einem der vorhergehenden Ansprüche, die mindestens einen Teil eines Fahrzeugdaches darstellt bzw. ausbildet.
